# FASCICULE DE BREVET EUROPEEN

(11) **EP 3 756 270 B1**
(45) Date de publication et mention de la délivrance du brevet: **10.06.2026**
(21) Numéro de dépôt: 19713093.3
(22) Date de dépôt: 21.02.2019
(51) Int. Cl.: H02K 3/18, H02K 3/28, H02K 15/0421, H02K 15/33

(54) **STATOR POUR UN MOTEUR ELECTRIQUE COMPORTANT DES BOBINAGES COMPACTS ET PROCEDE DE FABRICATION D'UN TEL STATOR**
STATOR FÜR EINEN ELEKTROMOTOR MIT KOMPAKTEN WICKLUNGEN UND VERFAHREN ZUR HERSTELLUNG EINES DERARTIGEN STATORS
ELECTRIC MOTOR STATOR COMPRISING COMPACT WINDINGS AND METHOD FOR MANUFACTURING SUCH A STATOR

(30) Priorité: 22.02.2018 FR 1851517
(43) Date de publication de la demande: 30.12.2020
(73) Titulaire: BNCE, 11110 Coursan (FR)
(72) Inventeur: NOGAREDE, Bertrand, 11110 COURSAN (FR)
(74) Mandataire: Ipsilon
(86) Numéro de dépôt international: PCT/FR2019/050402
(87) Numéro de publication internationale: WO 2019/162625

(56) Documents cités:
- WO-A1-2010/079278
- WO-A1-2013/168262
- CH-A- 108 795
- FR-A1- 2 362 479
- JP-A- 2005 137 174
- JP-A- H07 163 100
- US-B2- 6 548 933

## Description

### Domaine technique

L'invention se rattache au domaine de l'électrotechnique, et plus précisément celui des machines tournantes. Elle vise plus spécifiquement une structure particulière de bobinage de stator de moteur, ainsi qu'un procédé de fabrication permettant d'obtenir des avantages en termes de compacité et de fréquence de découpage du circuit d'alimentation du moteur.

### Techniques antérieures

De manière générale, les stators de moteurs électriques sont composés d'un circuit magnétique, présentant une ouverture centrale destinée à recevoir un rotor. Ce circuit magnétique comporte une culasse périphérique de laquelle s'étendent différentes excroissances radiales formant les pôles statoriques, orientés en direction du rotor. Chacune de ces excroissances reçoit un bobinage destiné à être alimenté par une phase d'un ensemble de courants ou tensions générant un champ alternatif tournant.

De manière générale, les bobinages sont réalisés de manière séparée, en enroulant un fil sur un gabarit présentant la forme du pôle statorique. Après fabrication, ces bobinages sont introduits dans le volume interne du stator, puis mis en place sur les excroissances polaires. On conçoit donc que ce type de procédé de mise en place comporte certaines contraintes.

En effet, le volume interne correspondant à l'encombrement du rotor doit être suffisant pour pouvoir accueillir chacun des bobinages avant qu'ils soient enchâssés sur le pôle statorique. Ceci oblige donc à limiter la profondeur de chaque pôle à une dimension inférieure au diamètre du rotor. Parallèlement, la mise en place finale de chaque bobinage se fait par une translation radiale centrée sur le pôle. Ainsi, la portion du bobinage qui est introduite en premier sur le pôle doit être suffisamment étroite pour passer entre les bobinages montés sur les deux pôles adjacents. Il s'ensuit qu'un volume vide est généré au fond des cavités accueillant les bobinages statoriques, du fait de l'écart angulaire entre deux pôles consécutifs. Ainsi, il demeure dans le stator des volumes vides exempts de conducteurs électriques.

Sur un autre plan, ce type de bobinage présente également un inconvénient lié à la géométrie du circuit lors de la formation de l'enroulement. En effet, lorsque les différentes spires sont créées par enroulement autour du gabarit, on constate l'apparition d'une capacité parasite entre deux spires successives, du fait de leur proximité. Cette capacité parasite induit une limitation de la fréquence maximale susceptible d'être employée pour l'alimentation des bobinages statoriques.

En effet, il est nécessaire de limiter cette fréquence de découpage en dessous de la fréquence de résonnance correspondant au circuit LC constitué de l'inductance de la bobine et de cette capacité parasite.

Une solution pour éloigner les spires consécutives consiste à employer des techniques de bobinage dites « à pas de pèlerin ». Cette solution est toutefois limitée puisqu'elle n'autorise qu'un léger écartement des spires successives, et qu'elle induit également des zones irrégulières dans le bobinage qui réduisent le taux de remplissage en conducteur électrique.

Une autre solution consiste à réaliser des conducteurs en forme de U, qui sont ensuite assemblés et montés sur une excroissance polaire, comme décrit dans les documents CH108795A, JP2005137174 A, ou US6548933 B2. Toutefois, cet assemblage est délicat à réaliser, et induit un défaut de reproductibilité des propriétés électriques d'un moteur à l'autre.

### Exposé de l'invention

Un des objectifs de l'invention est donc de proposer une structure de moteur électrique, et plus précisément de son bobinage statorique, qui optimise le volume intérieur du stator pour maximiser les ampères tours du moteur. Un autre objectif est de permettre une maîtrise et une diminution de la capacité parasite présente entre spires, et ce avec un haut niveau de reproductibilité.

Un autre objectif de l'invention est de fournir un moteur qui puisse fonctionner sous des tensions élevées, par une maîtrise de la tension de claquage au sein du bobinage, ainsi qu'un fonctionnement à fréquence de découpage plus élevée, en vue de fonctionnement à haute vitesse, et à faible taux d'harmoniques.

Pour ce faire, le Demandeur a conçu un stator de moteur électrique, qui de façon connue comporte un circuit magnétique présentant une pluralité d'excroissances polaires radiales.

Conformément à l'invention, ce stator se caractérise en ce qu'il comporte, pour toute ou partie de ces excroissances, un ensemble de zones conductrices de forme générale en U, disposées autour de cette excroissance, les extrémités de chacune de ces zones conductrices étant situées au niveau d'un plan sensiblement commun.

Complémentairement, ce stator comporte également au moins un organe de connexion comprenant une pluralité de pistes conductrices raccordées à des extrémités distinctes des zones conductrices, de manière à définir un circuit électrique continu formant un enroulement autour d'une ou plusieurs excroissances polaires radiales.

Autrement dit, l'invention consiste à réaliser le bobinage statorique à partir de deux parties distinctes. Une première partie forme un ensemble de spires partielles, qui s'étendent autour des pôles statoriques. Les extrémités de ces zones conductrices débouchent toutes d'un côté du stator, où elles sont ensuite raccordées à un organe de connexion, de type circuit imprimé, bus bar ou analogue, qui permet d'assurer les connexions individuelles des spires partielles.

Ainsi, le circuit de l'enroulement statorique est défini par la succession des spires partielles qui sont reliées les unes entre elles au travers de l'organe de connexion commun.

En d'autres termes, l'invention permet de réaliser le bobinage par un montage axial de l'ensemble des spires partielles autour du pôle statorique, puis une fermeture du bobinage statorique par l'intermédiaire d'un organe rapporté dans une seconde étape.

Ce mode opératoire permet avantageusement de profiter de l'intégralité du volume disponible dans le circuit magnétique du stator, et notamment l'espace situé entre les pôles statoriques. En effet, dans les solutions existantes, les bobinages sont introduits radialement en faisant pénétrer le pôle statorique dans l'évidement central du bobinage. Il est ainsi nécessaire que cet évidement ait des dimensions supérieures à l'extrémité du pôle statorique.

Ainsi, dans le cas où ce pôle présente des épanouissements latéraux destinés à lisser le couple moteur, le volume situé derrière ces épanouissements est en quelque sorte perdu.

La géométrie des éléments constituant ainsi le bobinage est particulièrement avantageuse. En pratique, les différentes zones conductrices sont disposées concentriquement autour de l'excroissance polaire statorique. En d'autres termes, les différentes spires partielles en forme de U sont agencées dans le même plan, et présentent un rayon de courbure de leurs zones courbes qui est croissant en se dirigeant vers l'extérieur. En d'autres termes, ces spires partielles sont imbriquées en gigogne les unes dans les autres, avec un espacement quasi constant entre chacune d'entre elles, en formant une couche plane ou incurvée.

En pratique, ces différentes couches incluant des spires partielles imbriquées peuvent elles-mêmes être empilées en étant juxtaposées selon un axe radial. Autrement dit, les différentes spires partielles forment une matrice dont chaque élément est défini par son numéro d'ordre par rapport au pôle statorique, et par son numéro d'ordre par rapport au rotor.

En pratique, les découpes qui séparent deux couches successives peuvent être planes, et ainsi facilement réalisables par des techniques telles que l'électro érosion avec un fil continu, ou une découpe par rayon laser, jet d'eau ou équivalent.

En variante, les découpes séparant deux couches successives peuvent également être courbes pour définir des spires de dimensions radiales sensiblement constantes et présentant une courbure centrée sur l'axe de rotation du rotor.

En pratique, le volume séparant des zones conductrices adjacentes peut être empli d'une résine électriquement isolante, assurant ainsi la tenue diélectrique de l'enroulement. Cette isolation peut également être obtenue en utilisant des feuilles de matériau isolant électriquement, insérées entre des zones conductrices adjacentes. De telles dispositions permettent d'assurer une bonne tenue diélectrique du bobinage, compte tenu des dimensions des découpes formant l'écart entre des spires adjacentes, qui peut atteindre quelques dizaines à quelques centaines de microns, en comparaison avec le pouvoir isolant réduit des gaines protectrices recouvrant les fils des bobinages de l'Art Antérieur, qui est de l'ordre de la dizaine de microns.

Une telle disposition permet ainsi l'emploi du moteur à des tensions d'alimentation particulièrement élevées.

En pratique, l'organe de connexion assurant la liaison électrique entre les différentes spires peut être réalisé de différentes manières.

On peut par exemple employer un organe de connexion pour chaque excroissance polaire, de manière à définir un enroulement au niveau de chaque pôle statorique avec l'intégralité des spires composant le bobinage. A l'inverse, on peut prévoir qu'un organe de connexion est commun pour plusieurs excroissances polaires, et notamment à l'ensemble de tous les bobinages statoriques.

Autrement dit, cet organe de connexion peut être unique, et assurer la jonction entre les spires au niveau d'un bobinage statorique donné, mais également entre deux bobinages différents, et de préférence des bobinages alimentés par la même phase du système de tension d'alimentation. Ainsi, il est possible de combiner des spires de deux bobinages disposés diamétralement en les connectant au travers de l'organe de connexion, de manière à augmenter la distance entre spires consécutives d'un même enroulement global.

En pratique, cet organe de connexion peut être réalisé sous différentes formes, en fonction des applications et des niveaux de tension et d'intensité requises. Il peut ainsi s'agit d'un circuit imprimé multicouches, présentant des pistes de largeur adaptée au niveau de courant appliqué. Il peut également s'agir d'un organe combinant des conducteurs plus massifs, tels que ceux connus sous l'appellation de bus bar.

Dans des formes plus sophistiquées de l'invention, il est possible d'inclure sur cet organe de connexion des éléments semi-conducteurs actifs permettant la surveillance, le diagnostic, voire la reconfiguration des bobines pour corriger un défaut ou assurer un point de fonctionnement distinct de celui de la configuration d'origine. Cette reconfiguration peut-être en particulier utile dans les machines à haute vitesse et forte puissance. En effet, l'invention permet de mettre en série ou en parallèle tout ou partie des spires, en fonction des conditions d'utilisation. Ainsi, lorsque on souhaite réduire le flux magnétique engendré par l'enroulement statorique, il est possible de réduire le nombre de spires en connectant certaines spires en parallèle, pour le même courant d'alimentation, de manière à réduire ainsi le nombre d'Ampère-tour. Il est possible également de faire varier le nombre de spires en temps réel, de manière à contrôler le flux instantané, par exemple à courant constant. Le nombre de spires peut varier entre deux valeurs extrêmes opposées, selon le nombre et le sens des spires mises en série.

Un autre aspect de l'invention concerne un procédé de fabrication d'un stator de moteur électrique comme évoqué ci-dessus, comportant ainsi un circuit magnétique statorique comprenant une pluralité d'excroissances polaires radiales.

Conformément à l'invention, ce procédé comporte les étapes suivantes :
- tout d'abord, la réalisation dans un bloc de matériau conducteur d'une pluralité de découpes traversantes, définissant un ensemble de zones conductrices solidaires mécaniquement de forme générale en U autour d'un ou plusieurs évidements centraux ;
- puis, une insertion de cet ensemble de zones conductrices dans le circuit magnétique selon un mouvement sensiblement axial jusqu'à ce que les excroissances polaires radiales emplissent le ou les évidements centraux de cet ensemble de zones conductrices ;
- enfin, la fixation sur cet ensemble de zones conductrices, d'un ou plusieurs organes de connexion, comportant une pluralité de pistes conductrices raccordées à des extrémités distinctes des zones conductrices, de manière à définir un circuit électrique continu formant un enroulement autour d'une ou plusieurs excroissances polaires radiales.

Autrement dit, le procédé conforme à l'invention consiste à fabriquer le bobinage à partir d'un bloc de matériau compact, et à réaliser dans ce dernier des fentes qui définissent des spires élémentaires partielles. Ce bloc peut ensuite être mis en place sur le pôle statorique par un déplacement axial, et non par enfilement radial sur le pole statorique.

Il s'ensuit que ce mode de montage permet d'occuper l'intégralité du volume situé entre les pôles statoriques avec des bobinages plus larges dans la zone la plus proche de la culasse que dans celle la plus proche du rotor.

Une telle forme est bien entendu impossible à introduire sur les pôles statoriques par un mouvement radial, puisqu'alors les enroulements qui seraient mis en place préalablement empêcheraient l'introduction des enroulements ultérieurs.

Grâce à ce mode de fabrication, on assure une régularité quasi parfaite de la géométrie des spires et de celles des enroulements statoriques avec une amélioration très nette de la reproductibilité de ces constructions, au regard notamment des bobinages réalisés de manière manuelle dans l'Art Antérieur. De par sa construction, le bobinage possède des extrémités dont la position est précise et identique d'un bobinage à l'autre, ce qui confère à ces extrémités des possibilités de servir d'index ou de repères pour le positionnement de composants supplémentaires à fonctions mécaniques ou électriques. La très grande régularité de fabrication permet ainsi de diminuer la variabilité des paramètres d'un bobinage dépendant de sa géométrie, et notamment sa tenue diélectrique ainsi que les capacités parasites entre spires qui influent directement sur la fréquence de résonance du bobinage. La réduction des capacités parasites a aussi pour conséquence directe la réduction et la maîtrise des courants haute fréquence de mode commun qui circulent entre le bobinage et la carcasse et qui sont très souvent à l'origine d'une usure prématurée des roulements (et ce même pour des machines à vitesse lente).

En pratique, le procédé comporte avantageusement une étape consistant à assurer la solidarisation des zones conductrices par une matière isolante. Autrement dit, les espaces entre les spires adjacentes sont comblés d'un matériau qui assurent à la fois la fonction d'isolation électrique entre des spires adjacentes, mais également la solidarisation de cet ensemble de spires partielles pour permettre sa manipulation et son maintien en forme.

En pratique, cette matière isolante peut être une résine contenue dans un bain dans lequel est plongé l'ensemble des zones conductrices après la réalisation des découpes définissant la géométrie des spires partielles. On assure ainsi le remplissage de ces interstices par un isolant, par exemple sous la forme d'une résine isolante introduite sous vide et polymérisée a posteriori, tandis que les spires partielles sont maintenues spatialement les unes par rapport aux autres grâce à un talon de maintien.

Avantageusement en pratique, le procédé de fabrication comporte une étape consistant à extraire du bloc de matière conductrice la portion qui définit l'évidement central. En pratique, on sépare également l'ensemble des zones conductrices de la portion du bloc de matériau conducteur assurant le maintien solidaire de ces zones conductrices pendant la réalisation des découpes. Autrement dit, après la réalisation des découpes définissant les spires partielles, celles-ci sont encore maintenues solidaires les unes des autres par un talon de matière qui reste lié à l'ensemble des spires partielles. Ce talon est alors éliminé, en même temps que la portion de matière qui se situe au centre des spires partielles, et qui est destiné à accueillir le pôle statorique.

En pratique, différentes techniques peuvent être employées pour réaliser les différentes découpes. On citera notamment l'électro érosion avec un fil continu, qui permet de définir des découpes sous forme de surface réglée, et avantageusement de surfaces développables au sens mathématique du terme.

D'autres techniques peuvent également être envisagées telles que la découpe par jet d'eau ou par laser, ou bien encore des techniques d'électro érosion par aiguilles, permettant l'usinage du bloc de matière par une face unique, et ainsi de réaliser des découpes courbes pour la définition des spires concentriques, ainsi que pour la séparation des couches successives de spires empilées radialement.

Différentes variantes de géométries les peuvent être mises en œuvre pour la réalisation de ce bobinage statorique. Ainsi, il est possible de réaliser autant d'ensembles individuels de zones conductrices que d'excroissances polaires, de manière à les insérer individuellement dans le circuit magnétique. Autrement dit, on réalise alors pour chaque pôle statorique un ensemble de spires, et on met en place ces différents ensembles dans le châssis de façon indépendante.

À l'inverse, il est possible de réaliser une pluralité d'ensembles de zones conductrices dans un unique bloc de matériau conducteur, de manière à insérer ensuite cette pièce complexe en une seule étape dans le circuit magnétique du stator. Autrement dit, le procédé consiste dans ce cas à réaliser plusieurs, voire tous les enroulements statoriques (hormis la portion de fermeture) dans un seul et unique bloc, qui peut être ensuite introduit axialement dans le circuit magnétique du moteur en une seule étape. Bien entendu, en fonction des contraintes industrielles, il est possible de réaliser un seul ou plusieurs blocs regroupant tout ou partie de ces enroulements statoriques.

En pratique, il est possible de réaliser les découpes caractéristiques selon différentes géométries, et orientations.

Ainsi, dans un premier mode de réalisation, il est possible de réaliser des découpes radiales, qui passent par l'axe virtuel du stator, ces découpes séparant des spires concentriques associées à une même excroissance polaire. Autrement dit, deux spires adjacentes situées à une même distance de l'axe du moteur sont séparées par des plans passant par l'axe du moteur.

Dans un autre mode de réalisation, ces mêmes plans séparant des spires concentriques peuvent être tous parallèles, et répartis de part et d'autre d'un plan médian passant par l'axe du moteur.

Concernant les découpes séparant des spires adjacentes situées à des distances différentes de l'axe du moteur, plusieurs possibilités peuvent être mises en œuvre.

Ainsi, ces découpes peuvent être planes, et perpendiculaires au plan de symétrie radiale de l'enroulement statorique considéré.

Dans une autre forme de réalisation, ces découpes peuvent être cylindriques, et centrées sur l'axe du moteur pour séparer des spires radialement décalées associées à une même excroissance polaire. En pratique, ces découpes peuvent être formées par un outil circulaire de type scie-cloche ou analogue, ou bien encore résulter de l'assemblage de plusieurs éléments cylindriques concentriques, de diamètres étagés. Autrement dit, dans ce cas, le bloc de matériau conducteur est réalisé par l'assemblage de plusieurs tubes concentriques emmanchés les uns sur les autres, et solidarisé à une pièce de maintien, typiquement un disque. Ainsi, les découpes pour délimiter les zones conductrices qui formeront les futures spires sont réalisées sur l'ensemble des tubes simultanément, sans nécessiter d'assemblage ou de positionnement ultérieur des spires les unes par rapport aux autres.

### Description sommaire des figures

La manière de réaliser l'invention, ainsi que les avantages qui en découlent ressortiront bien de la description du mode de réalisation qui suit, à l'appui des figures annexées dans lesquelles :
La figure 1 est une vue en perspective sommaire d'un bloc de matière conductrice sur laquelle sont identifiées les différentes découpes permettant de définir les spires partielles.
La figure 2 est une vue de la face du bloc de la figure 1 parallèle au plan radial de l'enroulement statorique.
La figure 3 est une vue de de dessous du bloc de la figure 1.
Les figures 4 et 5 sont des vues des faces du bloc de la figure 1, selon des plans orthoradiaux, correspondant aux faces respectivement au contact de la culasse du stator et en regard du rotor.
La figure 6 est une vue en coupe médiane selon le plan VI-VI' de la figure 1.
La figure 7 est une vue en perspective sommaire du bloc de la figure 1 dans laquelle une fraction a été éliminée, pour illustrer le détail de la géométrie des spires partielles.
La figure 8 est une vue du bloc de la figure 1, montrée après élimination du talon de matière rassemblant les différentes spires partielles.
Les figures 9 à 11 sont des vues en perspective sommaire d'assemblages d'enroulements statoriques analogues à celui de la figure 8, réalisés selon différentes variantes d'orientations et géométries de découpes.
La figure 12 est une vue en perspective sommaire montrant l'opération de montage des différents blocs de la figure 8 à l'intérieur du stator du moteur.
La figure 13 est une vue en perspective sommaire montrant la mise en place de l'organe de connexion sur les extrémités des blocs insérés dans le stator à la figure 12.
La figure 14 est une vue en coupe schématique selon un plan radial de l'organe de connexion de la figure 13, montrant également la partie supérieure des blocs de spires partielles sur deux enroulements statoriques diamétraux.
La figure 15 est une vue de dessus schématique montrant l'organe de connexion de la figure 13, ainsi que certaines pistes conductrices connectant des spires élémentaires.

Bien entendu, les différents éléments illustrés aux figures l'ont été avec des dimensions et des proportions qui peuvent s'écarter de la réalité, et qui n'ont été données que pour faciliter la compréhension de l'invention.

### Manière de réaliser l'invention

Comme déjà évoqué, l'invention concerne un procédé de fabrication d'un bobinage statorique de moteur électrique, ainsi que le bobinage et plus généralement le stator ainsi obtenu.

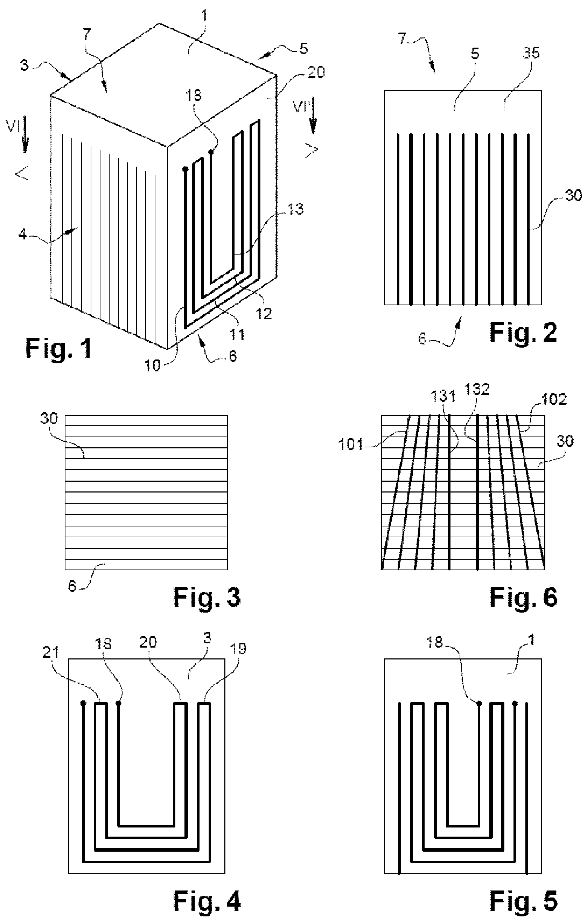

Pour réaliser ce procédé, on peut comme illustré très schématiquement à la figure 1, utiliser un bloc de matériau conducteur, typiquement à base de cuivre ou équivalent, dont le volume correspond sensiblement à celui d'un bobinage élémentaire destiné à être mis en place sur un pôle statorique.

Ce bloc **1** est travaillé pour réaliser un ensemble de découpes, qui définiront des spires élémentaires permettant de réaliser la partie du bobinage statorique qui sera inséré à l'intérieur du circuit magnétique statorique.

Plus précisément, et comme illustré à la figure 1, le bloc **1** comporte une face **2,** qui lorsque le bobinage sera inséré dans le stator, est destinée à venir au contact de la culasse du stator. Dans la suite de la description, cette face sera considérée comme la face avant du bloc. Ainsi, la face arrière **3** est celle qui sera destinée à venir en regard du rotor, tandis que les faces latérales **4** et **5** viendront quant à elles en regard des bobinages statoriques adjacents. La face inférieure **6** correspond à l'extrémité basse de l'enroulement statorique, tandis que la face supérieure **7** du bloc un correspond à celle où les différentes spires partielles seront connectées entre elles par l'organe de connexion évoqué ci-dessus.

Le bloc **1** comporte plusieurs séries de découpes traversantes, c'est-à-dire s'étendant respectivement depuis la face avant **2** jusqu'à la face arrière **3,** et d'une face latérale **4** à l'autre **5.** Précisément, la face avant **2** comporte un ensemble de découpes **10,11,12,13** qui définissent sur la face arrière des motifs de forme générale en U, qui sont imbriqués les uns dans les autres du plus grand **10** vers l'extérieur vers le plus petit **13** au centre.

La découpe centrale **13** correspond sensiblement à aux contours du pôle statorique sur lequel le futur bobinage statorique sera mis en place. Comme illustré à la figure 6, ces découpes **10-13** sont traversantes de la face **3** jusqu'à la face arrière **2.** Précisément, ces découpes présentent différentes angulations. La découpe **13** présente deux pans **131 132** sensiblement parallèles, et écartés d'une distance légèrement supérieure à la dimension du pôle statorique mesurée orthoradialement. À l'inverse, la découpe **10** présente deux pans **101 102** qui forment entre eux un angle non nul, de manière à ce que le bobinage statorique présente une section transversale sensiblement trapézoïdale, plus large sur sa face arrière que sur sa face avant. En théorie, l'angle entre les pans **101** et **102** peut aller jusqu'à une valeur de 360° divisé par le nombre de pôles statoriques.

Dans une forme particulière de réalisation, ces découpes peuvent être réalisées par des techniques d'électro-érosion, consistant à assurer le passage d'un fil conducteur formant électrode, et s'étendant de la face avant **2** jusqu'à la face arrière **3,** en se déplaçant selon le motif des différentes découpes pour former les plans délimitant les futures spires. Dans un cas particulier, il peut être avantageux comme illustré aux figures 4 et 5 de réaliser un premier perçage **18,** d'un diamètre suffisant pour permettre l'introduction du fils électrode, pour ensuite amorcer la découpe d'une largeur moindre. De la même manière, pour faciliter le processus de création, il peut être avantageux de relier des découpes en U successives par des segments **19,20,21** permettant de réaliser les différentes découpes **10-13** en continuité, sans interruption du processus d'électro érosion.

Complémentairement, le bloc **1** comporte également une autre série de découpes s'étendant d'une face latérale **4** à l'autre **5,** selon des plans parallèles à la face avant **2.** Ces découpes peuvent être réalisées comme illustré à la figure 2 à partir de la face inférieure 6, en s'étendant en direction de la face supérieure **7,** en laissant toutefois une portion exempte de découpes **35,** servant de talon assurant la cohésion globale des différentes portions définies entre les découpes.

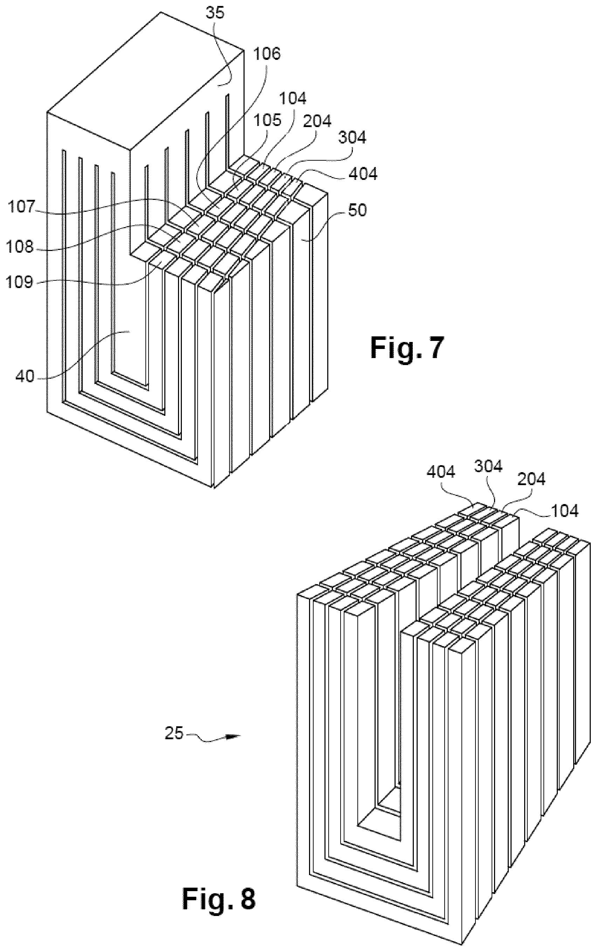

Le résultat de ces différentes découpes est illustré à la figure **7** dans laquelle une portion du bloc a été occultée, de manière à montrer une partie des spires élémentaires. Plus précisément, le bloc ainsi usiné comporte une portion centrale **40,** qui présente un volume similaire à celui du pôle statorique sur lequel sera inséré le bobinage statorique.

Le bloc illustré partiellement à la figure 7 comporte également le talon **35,** qui assure la tenue des différentes couches de spires partielles **104-109, 204, 304, 404.** De la sorte, ce bloc est manipulable aisément, et peut-être traité pour assurer la mise en place d'un revêtement isolant. Plus précisément, dans un cas de figure particulier, ce bloc peut être trempé dans une résine de type époxy ou analogue, qui pénètre dans les découpes et emplit les volumes correspondants. En pratique, le remplissage peut se faire sous vide, pour maîtriser la pénétration de la résine dans les découpes entre spires et éviter l'apparition de bulles d'air préjudiciables aux propriétés diélectriques. Avantageusement, l'ensemble est passé en étuve pour assurer une polymérisation de la résine. On notera que l'épaisseur du matériau isolant et donc relativement importante, en comparaison avec les isolants gainant les fils des bobinages à fil enroulé, puisqu'il correspond sensiblement à l'espace d'une découpe par électro érosion, de l'ordre de quelques dizaines à quelques centaines de microns. Cet espace également pour avantage d'être très constant et reproductible.

Bien entendu, l'isolation électrique des différentes spires du bloc peut être réalisée par d'autres techniques, en particulier l'insertion de matériaux solides, sous forme de feuilles isolantes. Il également possible de mixer deux types d'isolant, en insérant des feuilles de matériaux isolant dans d'une partie des découpes, en particulier les découpes formées par des plans parallèles, tandis que les autres découpes sont quant à elles emplies d'une résine liquide destinée à se solidifier.

Dans une étape ultérieure illustrée à la figure 8, le talon **35** est alors éliminé, ce qui d'une part libère les portions **50** définies entre les faces latérales **4, 5** du bloc, et la découpe 10 la plus externe, du fait de la forme trapézoïdale du futur bobinage. Parallèlement, l'élimination du talon **35** permet de libérer les extrémités de l'ensemble des spires partielles, et définir ainsi une matrice des connexions à réaliser pour finaliser le bobinage.

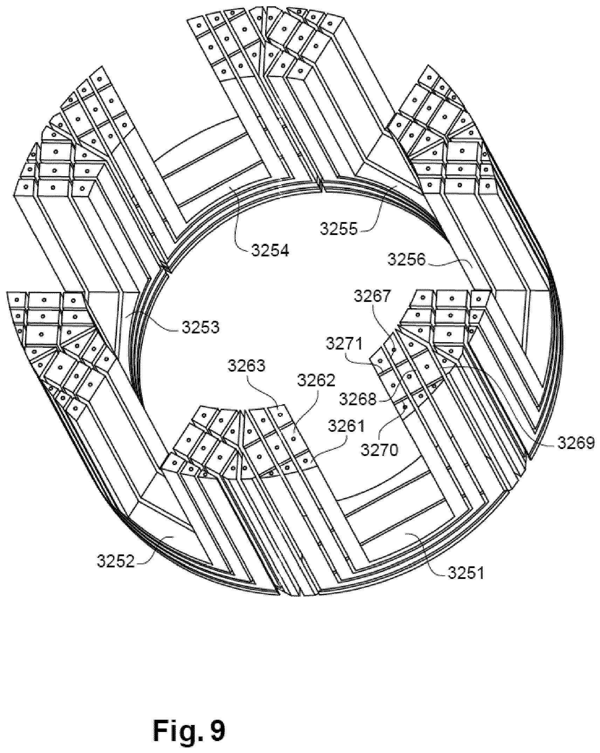

La variante illustrée à la figure 9 montre l'assemblage de six blocs élémentaires **3251-3256** correspondant chacun à un sixième de l'enroulement statorique global. Chaque bloc **3251-3256,** , est réalisé par un ensemble de découpes planes **3267-3271.** Ces découpes se subdivisent en deux groupes de découpes perpendiculaires les unes aux autres, définissant des spires **3261-3263** présentant des sections distinctes. Il est possible de normaliser la section moyenne, en réalisant des regroupements en parallèle de spires de sections de valeurs les plus éloignées de la moyenne, par les mécanismes décrits ci-dessus et incorporés dans l'organe de connexion.

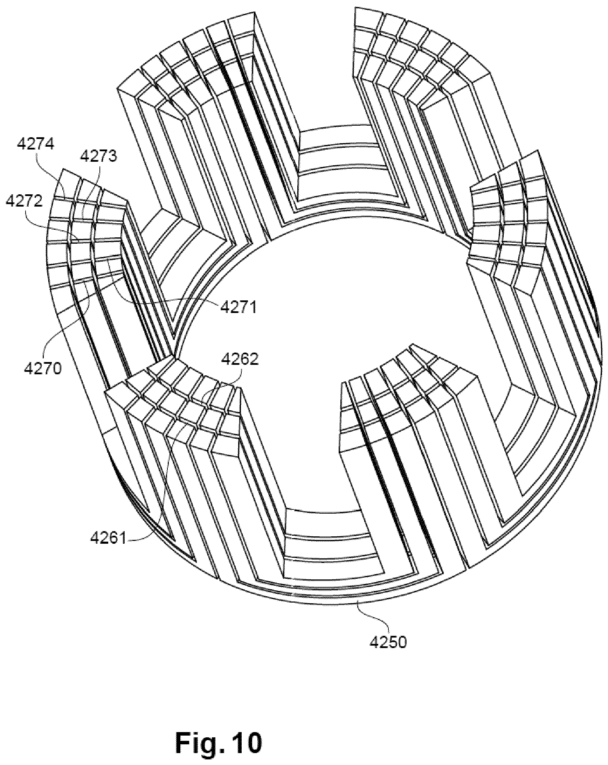

Dans la variante illustrée à la figure 10, les différents enroulements statoriques sont réalisés dans un bloc unique **4250,** à partir de deux séries de découpes distinctes. Dans l'exemple illustré, deux découpes **4261, 4262,** de forme cylindrique, sont réalisées dans l'ensemble du bloc, de manière à définir trois niveaux de spires, à trois niveaux de distance distincts du centre du moteur. Ces découpes peuvent être réalisés par des saignées concentriques obtenues par électroérosion et enfonçage d'une cloche fine, avec autant de lames que d'interstices requis selon la direction radiale. À titre de variante, on pourrait réaliser une géométrie équivalente en emmanchant des tubes métalliques cylindriques concentriques, avec un jeu entre tubes correspondant à l'espace entre deux niveaux de spires décalés radialement. Ces tubes sont encastrés dans un ensemble de saignées concentriques de mêmes diamètres moyen réalisé dans une base discoïdale métallique, avantageusement réalisée en tournage. De la sorte, les tubes sont maintenus en position les uns par rapport aux autres pour permettre la réalisation des découpes traversantes définissant les découpes radiales **4270-4274** formées par des plans passant par l'axe du moteur. Cette géométrie permet de réaliser des spires dont la section est sensiblement homogène au sein de l'enroulement statorique.

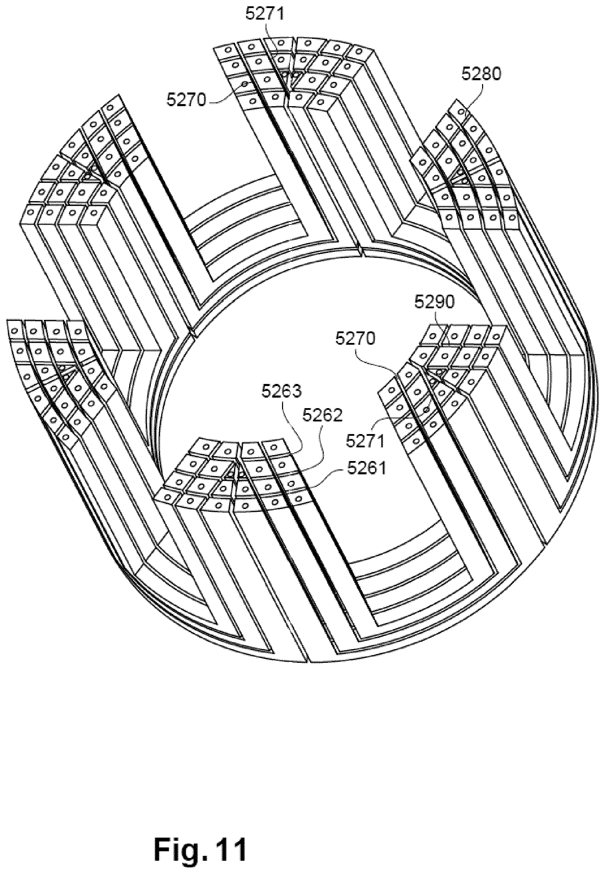

Dans une variante illustrée la figure 11, le bloc comportant les six enroulements statoriques comportent également des découpes cylindriques **5261-5263** analogues à celles réalisées sur la variante de la figure 10. Complémentairement, ce bloc reçoit plusieurs groupes de découpes planes **5270 5271, 5280, 5290** selon des plans parallèles, qui s'étendent d'un côté à l'autre du bloc, réalisant ainsi des découpes dans les deux enroulements statoriques diamétralement opposés. Ces découpes sont réalisées par électro érosion, et dans l'exemple illustré, trois séries de découpes permettent de réaliser l'ensemble des spires du futur enroulement statorique.

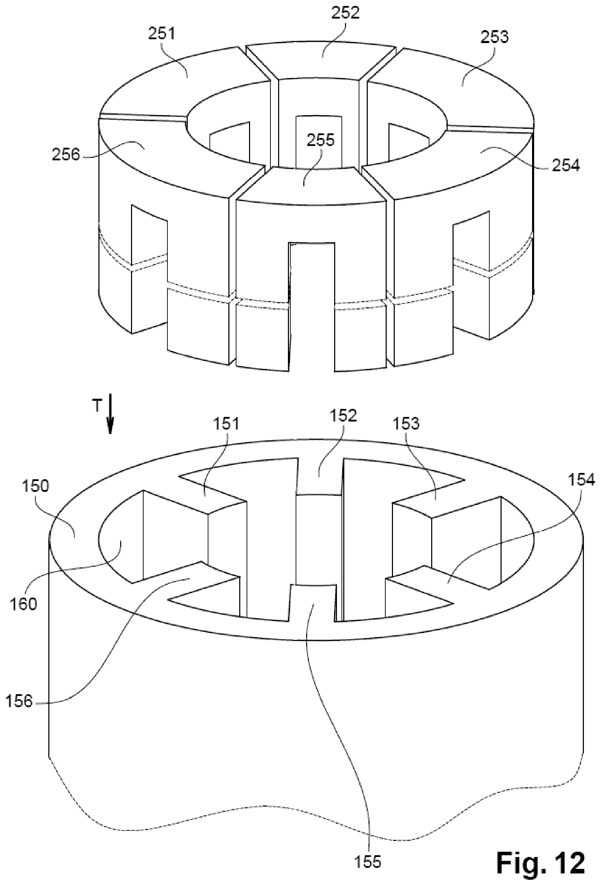

Par la suite, comme illustré à la figure 12, six de ces blocs **251-256** analogues au bloc **25** de la figure 8 sont sélectionnés pour être ensuite insérés dans le circuit magnétique **150** du stator. Plus précisément, ce circuit magnétique **150** comporte une culasse périphérique à l'intérieur de laquelle émergent six excroissances radiales **151-156,** destinées à former les pôles du stator. Au centre de ces six excroissances se trouve l'emplacement du futur rotor du moteur. Ainsi, par un mouvement de translation axiale, illustrée par la flèche T, les différents blocs **251-256** sont introduits à cheval sur les excroissances polaires **151-156,** en emplissant autant que possible les volumes 160 définis entre deux excroissances polaires successives. Il est à noter que la mise en place de ces blocs de spires partielles peut se faire indépendamment de la forme de l'extrémité des pôles radiaux, qui pourrait dans une forme non présentée inclure des épanouissements s'étendant orthoradialement. On constate donc que le taux de remplissage du volume statorique est presque total, à comparer avec des valeurs de l'ordre de 50 % pour des bobinages filaires classiques.

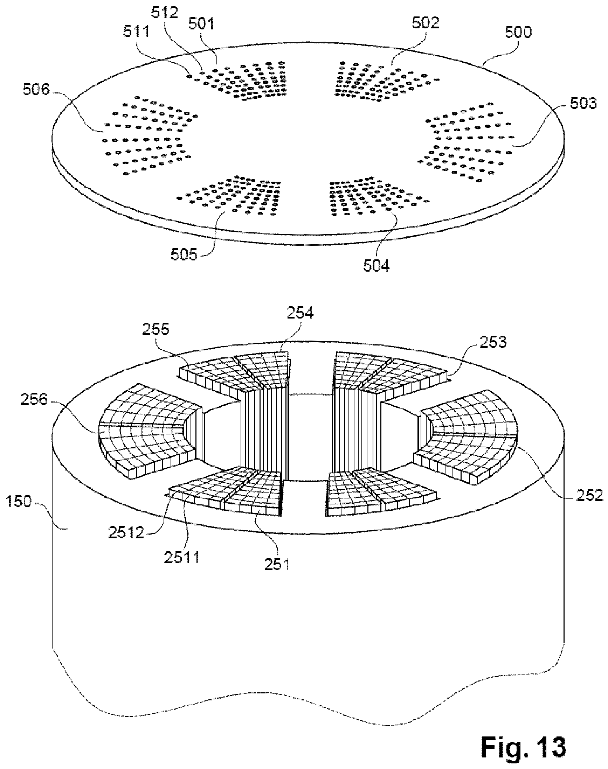

Par la suite, et comme illustré à la figure 13, le circuit magnétique **150,** équipé de l'ensemble des blocs **251-256** formant l'essentiel des bobinages reçoit un organe de connexion **500,** conçu pour assurer la connexion entre des spires élémentaires partielles en vue de former l'ensemble des bobinages statoriques. Plus précisément, cet élément de connexion **500** se présente sous la forme d'un circuit imprimé possédant une pluralité de zones **501-506** de plots de connexion **511,512.** Ces plots **511,512** sont agencés pour venir en regard des extrémités **2512,2511** des spires partielles émergeant de la culasse du stator. Bien entendu, il diverses variantes de raccordement sont possibles pour monter l'organe de connexion sur les ensembles de spires partielles. On peut notamment citer l'emploi de pâtes à souder, voire de brasure reliant des plots de connexion de l'organe de connexion et les extrémités des spires découpées dans le bloc métallique massif. On peut également envisager que le circuit imprimé formant l'organe de connexion comporte sur sa face en regard des bobinages, un ensemble de pions venant s'enficher dans des trous complémentaires réalisés au niveau des extrémités des spires.

Bien entendu, cet organe de connexion peut être réalisé autrement que par un circuit imprimé, en particulier avec les organes métalliques du type « bus bar » ou analogue. Dans la forme représentée, le circuit imprimé est unique pour l'ensemble des bobinages statoriques, mais il est possible de prévoir un organe de connexion pour un ou plusieurs bobinages statoriques.

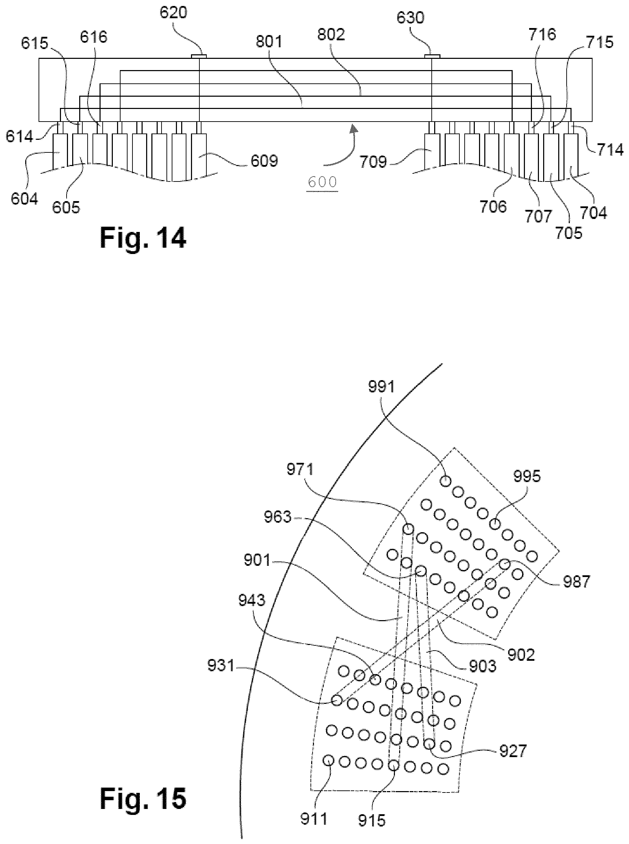

L'organe de connexion **600,** tel qu'illustré à la figure 14 permet d'assurer la connexion entre les extrémités **604,605** des spires qui sont situées d'un côté du pôle statorique, avec les extrémités **704,705,706,707** situées de l'autre côté du même pôle, afin de définir des spires complètes autour de ce pôle. Cette connexion se fait par l'intermédiaire des pistes **801,802** s'étendant à l'intérieur du circuit imprimé, entre les plots de connexion **614-616** et les plots **714-716.** Parallèlement, les spires s'étendant jusqu'aux extrémités **609, 709** peuvent être connectées aux système d'alimentation, ou aux autres bobinages par les plots **620,630** situés sur la face supérieure de l'organe de connexion **600.** Les pistes **801,802** représentées à la figure 11 sont données à titre d'exemple, et leur positionnement exact ainsi que la détermination des plots de connexion correspondant seront expliqués ci-après en détail.

Le circuit imprimé peut avantageusement être un circuit multicouche, permettant la disposition des pistes conductrices sur différents niveaux et autorisant notamment la mise en parallèle électrique de plusieurs pistes géométriquement parallèles afin d'augmenter la section conductrice entre deux plots de connexion. Il est également possible d'élargir les pistes pour augmenter cette section en fonction des besoins.

Comme illustré schématiquement à la figure 15, les pistes **901,902,903** permettent de connecter les extrémités de spires partielles qui sont qui ne sont pas situées sur des couches de spires directement adjacentes. Plus précisément, la piste **901** permet de relier l'extrémité **915** de la spire partielle formée par la portion conductrice entre les extrémités **915 995,** avec l'extrémité **971,** appartenant à la spire s'étendant entre les extrémités **971** et **931.** Complémentairement, la piste **902** permet de relier l'extrémité **931** avec l'extrémité **987,** appartenant à la spire s'étendant jusqu'à l'extrémité **927.** La piste **903** relie quant à elle l'extrémité **927** de la spire évoquée ci-avant avec l'extrémité **963** appartenant à la spire s'étendant jusqu'à l'extrémité **943.** On constate ainsi que les spires successives de cet enroulement global ne se situent pas sur des couches adjacentes, (dans un sens radial), mais sont nettement plus écartées. Il s'ensuit que la capacité parasite présente entre deux spires consécutives est très nettement diminuées, de sorte que les modes propres du bobinage, évaluées en tenant compte des inductances élémentaires de chaque spire, et des capacités parasites existant entre chaque spire se situent à des fréquences nettement plus élevées. Il s'ensuit que le moteur ainsi réalisé, peut être alimenté avec des systèmes de tensions générées par des systèmes de type MLI ou PWM fonctionnant à avec des fréquences de découpage nettement plus élevées que dans l'art antérieur.

En pratique, le routage permettant de déterminer le positionnement optimal des pistes peut être obtenu par un processus d'optimisation visant à minimiser les capacités parasites, ou à augmenter les fréquences propres du bobinage.

A titre d'exemple, ce processus peut mettre en œuvre la définition d'une distance mathématique rendant compte du degré de proximité des deux demi-spires à interconnecter, par exemple une fonction des coordonnées mesurant l'écart quadratique entre la longueur du segment d'interconnexion reliant les des deux demi-pires à interconnecter et la longueur du segment qui court-circuiterait la demi-spire elle-même.

Ce processus nécessite de définir un critère à optimiser qui, du point de vue des effets de proximité, peut par exemple être une distance totale correspondant à la somme desdites distances mathématiques élémentaires pour l'ensemble de la bobine.

La résolution du problème d'optimisation consiste à minimiser cette distance totale si l'on se focalise sur les effets de proximité. Selon l'application ciblée, on peut rechercher l'optimisation des performances fréquentielles et/ou optimisation des pertes par conduction. Dans ce cas on peut avantageusement aborder la question sous un angle multi-critères en vue notamment de minimiser conjointement les effets de proximité et les résistances supplémentaires liées à la longueur totale des circuits d'interconnexion, deux critères qui peuvent apparaître comme antagonistes.

Bien entendu, dans des variantes non représentées, les différentes spires élémentaires partielles ne sont pas forcément reliées entre elles au sein d'un bobinage affecté à un unique pôle. L'invention couvre ainsi également les variantes dans lequel le bobinage est construit en associant des spires présentes sur des pôles différents, avec pour résultat notamment de diminuer très fortement, voire même de rendre négligeable la capacité parasite entre spires adjacentes.

Il ressort de ce qui précède que l'invention permet de réaliser des moteurs électriques dont le taux de remplissage du stator par les bobinages statoriques est particulièrement élevé. Un autre avantage important est de permettre un fonctionnement avec des fréquences de découpage également particulièrement hautes et une diminution de l'intensité des courants parasites de mode commun circulant dans la machine et son environnement. Un autre avantage industriel concerne la reproductibilité des paramètres électriques et notamment la tenue en tension, du fait de la construction déterministe des bobinages.

## Revendications

1. Procédé de fabrication d'un stator pour un moteur électrique, comportant un circuit magnétique statorique comprenant une pluralité d'excroissances polaires radiales, comportant les étapes suivantes :
• réalisation dans un bloc de matériau conducteur (1), d'une pluralité de découpes traversantes (10-13,30) définissant un ensemble de zones conductrices (104-109, 204, 304, 404) solidaires mécaniquement, de forme générale en U autour d'un ou plusieurs évidements centraux, les zones conductrices formant ainsi des spires partielles en forme de U ;
• insertion dudit ensemble de zones conductrices (251-256, 3251-3256) dans le circuit magnétique, selon un mouvement sensiblement axial jusqu'à ce que les excroissances polaires radiales (151-156) emplissent le ou les évidements centraux dudit ensemble de zones conductrices ;
• fixation sur ledit ensemble de zones conductrices d'un ou plusieurs organes de connexion (500) comportant une pluralité de pistes conductrices raccordées à des extrémités distinctes desdites zones conductrices de manière à définir un circuit électrique continu formant un enroulement autour d'une ou plusieurs excroissances polaires radiales.

2. Procédé selon la revendication 1, **caractérisé en ce qu'**il comporte une étape consistant à assurer la solidarisation desdites zones conductrices par une matière isolante électrique.

3. Procédé selon la revendication 2, **caractérisé en ce que** l'ensemble de zones conductrices est plongé dans un bain de résine isolante.

4. Procédé selon la revendication 1, **caractérisé en ce qu'**il comporte une étape consistant à extraire du bloc de matière conductrice, la ou les portions (40) définissant le ou les évidements centraux.

5. Procédé selon la revendication 1, **caractérisé en ce qu'**il comporte une étape consistant à séparer l'ensemble de zones conductrices d'une portion du bloc de matériau conducteur assurant le maintien solidaire des zones conductrices pendant la réalisation des découpes.

6. Procédé selon la revendication 1, dans lequel on réalise autant d'ensembles de zones conductrices que d'excroissance polaire du circuit magnétique du stator, lesdits ensembles étant ensuite insérés individuellement dans le circuit magnétique.

7. Procédé selon la revendication 1, dans lequel on réalise une pluralité d'ensembles de zones conductrices dans un unique bloc de matériau conducteur, ladite pluralité étant ensuite insérée dans le circuit magnétique sur plusieurs excroissances polaires radiales.

8. Procédé selon la revendication 1, **caractérisé en ce que** les découpes sont réalisées selon une technique choisie dans le groupe comprenant l'électroérosion, la découpe par jet d'eau, la découpe laser.

9. Stator pour un moteur électrique, obtenu selon le procédé de l'une des revendications 1 à 8.

10. Stator selon la revendication 9, dans lequel les découpes traversantes comprennent des découpes radiales (4270-4274) passant par l'axe virtuel du stator, séparant, dans lesdites spires partielles, des spires concentriques associées à une même excroissance polaire radiale (151-156).

11. Stator selon la revendication 9, dans lequel les découpes traversantes comprennent des découpes (5270, 5271, 5280, 5290) selon des plans parallèles et parallèles à l'axe virtuel du stator, séparant, dans lesdites spires partielles, des spires concentriques associées à une même excroissance polaire radiale (151-156).

12. Stator selon la revendication 9, dans lequel les découpes traversantes comprennent des découpes cylindriques (4261, 4262, 5261-5263)centrées sur l'axe virtuel du stator, séparant, dans lesdites spires partielles, des spires radialement décalées associées à une même excroissance polaire radiale (151-156).

13. Stator selon la revendication 9, dans lequel les découpes traversantes comprennent des découpes (3270, 3271) planes parallèles à l'axe virtuel du stator, séparant, dans lesdites spires partielles, des spires radialement décalées associées à une même excroissance polaire radiale (151-156).

14. Stator selon l'une des revendications 9 à 13, **caractérisé en ce qu'**il comporte un organe de connexion pour chaque excroissance polaire radiale (151-156).

15. Stator selon l'une des revendications 9 à 14, **caractérisé en ce qu'**il comporte un organe de connexion commun (500) pour plusieurs excroissances polaires radiales (151-156).

## Patentansprüche

1. Verfahren zur Herstellung eines Stators für einen Elektromotor, der einen Stator-Magnetkreis mit einer Vielzahl von radialen Polvorsprüngen umfasst, umfassend die folgenden Schritte:
• Realisierung einer Vielzahl von durchgehenden Ausschnitten (10-13,30) in einem Block aus leitfähigem Material (1), die eine Anordnung von leitfähigen Bereichen (104-109, 204, 304, 404) definieren, die mechanisch miteinander verbunden sind und im Allgemeinen eine U-Form um eine oder mehrere zentrale Aussparungen aufweisen, wobei die leitenden Bereiche somit U-förmige Teilwindungen bilden;
• Einfügung dieser Anordnung von leitfähigen Bereichen (251-256, 3251-3256) in den Magnetkreis in einer im Wesentlichen axialen Bewegungsrichtung, bis die radialen Polvorsprünge (151-156) die zentrale(n) Aussparung(en) der Anordnung von leitfähigen Bereichen ausfüllen;
• Befestigung eines oder mehrerer Verbindungselemente (500) an der Anordnung von leitfähigen Bereichen, wobei diese Verbindungselemente eine Vielzahl von Leiterbahnen umfassen, die so mit den einzelnen Enden der leitfähigen Bereiche verbunden sind, dass sie einen durchgehenden Stromkreis bilden, der eine Wicklung um einen oder mehrere radiale Polvorsprünge bildet.

2. Verfahren nach Anspruch 1, **dadurch gekennzeichnet, dass** es einen Schritt umfasst, der darin besteht, den Zusammenhalt der leitfähigen Bereiche durch ein elektrisch isolierendes Material sicherzustellen.

3. Verfahren nach Anspruch 2, **dadurch gekennzeichnet, dass** die Anordnung von leitfähigen Bereichen in ein Bad aus Isolierharz getaucht wird.

4. Verfahren nach Anspruch 1, **dadurch gekennzeichnet, dass** es einen Schritt umfasst, der darin besteht, den oder die Abschnitte (40), die die zentrale(n) Aussparung(en) bilden, aus dem Block aus leitfähigem Material herauszulösen.

5. Verfahren nach Anspruch 1, **dadurch gekennzeichnet, dass** es einen Schritt umfasst, der darin besteht, die Anordnung von leitfähigen Bereichen von einem Teil des Blocks aus leitfähigem Material zu trennen, der während der Realisierung der Ausschnitte den Zusammenhalt der leitfähigen Bereiche gewährleistet.

6. Verfahren nach Anspruch 1, bei dem so viele Anordnungen von leitfähigen Bereichen realisiert werden, wie der Magnetkreis des Stators Polvorsprünge aufweist, wobei diese Anordnungen anschließend einzeln in den Magnetkreis eingefügt werden.

7. Verfahren nach Anspruch 1, bei dem eine Vielzahl von Anordnungen von leitfähigen Bereichen in einem einzigen Block aus leitfähigem Material hergestellt wird, wobei diese Vielzahl anschließend über mehrere radiale Polvorsprünge in den Magnetkreis eingefügt wird.

8. Verfahren nach Anspruch 1, **dadurch gekennzeichnet, dass** die Ausschnitte mittels einer Technik hergestellt werden, die aus der Gruppe bestehend aus Elektroerosion, Wasserstrahlschneiden und Laserschneiden ausgewählt wird.

9. Stator für einen Elektromotor, der nach dem Verfahren gemäß einem der Ansprüche 1 bis 8 hergestellt wurde.

10. Stator nach Anspruch 9, bei dem die durchgehenden Ausschnitte radiale Ausschnitte (4270-4274) umfassen, die durch die virtuelle Achse des Stators verlaufen und in den Teilwindungen konzentrische Windungen abtrennen, die einem selben radialen Polvorsprung (151-156) zugehörig sind.

11. Stator nach Anspruch 9, bei dem die durchgehenden Ausschnitte Ausschnitte (5270, 5271, 5280, 5290) umfassen, die in Ebenen liegen, die parallel zueinander und parallel zur virtuellen Achse des Stators verlaufen und in den Teilwindungen konzentrische Windungen abtrennen, die einem selben radialen Polvorsprung (151-156) zugehörig sind.

12. Stator nach Anspruch 9, bei dem die durchgehenden Ausschnitte zylindrische Ausschnitte (4261, 4262, 5261-5263) umfassen, die auf der virtuellen Achse des Stators zentriert sind und in den Teilwindungen radial versetzte Windungen abtrennen, die einem selben radialen Polvorsprung (151-156) zugehörig sind.

13. Stator nach Anspruch 9, bei dem die durchgehenden Ausschnitte ebene Ausschnitte (3270, 3271) umfassen, die parallel zur virtuellen Achse des Stators verlaufen und in den Teilwindungen radial versetzte Windungen abtrennen, die einem selben radialen Polvorsprung (151-156) zugehörig sind.

14. Stator nach einem der Ansprüche 9 bis 13, **dadurch gekennzeichnet, dass** er für jeden radialen Polvorsprung (151-156) ein Anschlusselement aufweist.

15. Stator nach einem der Ansprüche 9 bis 14, **dadurch gekennzeichnet, dass** er für mehrere radiale Polvorsprünge (151-156) ein gemeinsames Anschlusselement (500) aufweist.

## Claims

1. A method for producing a stator for an electric motor, comprising a stator magnetic circuit comprising a plurality of radial polar protuberances, the method comprising the following steps:
• producing, in a block of conductive material (1), a plurality of through-cuts (10-13, 30) defining a set of mechanically conductive zones (104-109, 204, 304, 404) of generally U-shaped around one or more central openings, the conductive zones thus forming U-shaped partial turns;
• inserting said set of conductive zones (251-256, 3251-3256) into the magnetic circuit with a substantially axial movement until the radial polar protuberances (151-156) fill the one or more central openings of said set of conductive zones; and
• attaching, on said set of conductive zones, one or more connection components (500) comprising a plurality of conducting tracks connected to distinct ends of said conductive zones, so as to define a continuous electrical circuit forming a winding around one or more radial polar protuberances.

2. Method according to claim 1, **characterized in that** it comprises a step consisting of securing said conductive zones by an electrically insulating material.

3. Method according to claim 2, **characterized in that** the set of conductive zones is dipped into an insulating resin bath.

4. The method according to claim 1, further comprising a step of extracting, from the block of conductive material, the one or more portions (40) defining the one or more central openings.

5. The method according to claim 1, further comprising a step of separating the set of conductive zones from a portion of the block of conductive material that maintains said conductive zones secured together during the production of the through-cuts.

6. The method according to claim 1, wherein as many sets of conductive zones as polar protrusions of the stator magnetic circuit are produced, said sets being then individually inserted into the magnetic circuit.

7. The method according to claim 1, wherein a plurality of sets of conductive zones are produced in a single block of conductive material, said plurality being then inserted into the magnetic circuit on several radial polar protuberances.

8. The method according to claim 1, wherein the through-cuts are produced using a technique selected from the group consisting of electro-erosion, water-jet cutting, and laser cutting.

9. A stator for an electric motor obtained according to the method of any one of claims 1 to 8.

10. The stator according to claim 9, wherein the through-cuts include radial cuts (4270-4274) passing through a virtual axis of the stator and separating, within said partial turns, concentric turns associated with a same radial polar protuberance (151-156).

11. The stator according to claim 9, wherein the through-cuts include cuts (5270, 5271, 5280, 5290) extending along planes parallel to the virtual axis of the stator and separating, within said partial turns, concentric turns associated with a same radial polar protuberance (151-156).

12. The stator according to claim 9, wherein the through-cuts include cylindrical cuts (4261, 4262, 5261-5263) centered on the virtual axis of the stator and separating, within said partial turns, radially offset turns associated with a same radial polar protuberance (151-156).

13. The stator according to claim 9, wherein the through-cuts include flat cuts (3270, 3271) parallel to the virtual axis of the stator and separating, within said partial turns, radially offset turns associated with a same radial polar protuberance (151-156).

14. The stator according to any one of claims 9 to 13, comprising one connection component for each radial polar protuberance (151-156).

15. The stator according to any one of claims 9 to 14, comprising a common connection component (500) for several radial polar protuberances (151-156).
